Europäisches Patentamt
European Patent Office
Office européen des brevets

(19) (11) Publication number: **0 278 687 A2**

(12) **EUROPEAN PATENT APPLICATION**

(21) Application number: **88300965.6**

(51) Int. Cl.⁴: **F16L 5/00**, F16L 37/00

(22) Date of filing: **05.02.88**

(30) Priority: **09.02.87 US 12255**

(43) Date of publication of application: **17.08.88 Bulletin 88/33**

(84) Designated Contracting States: **DE FR GB NL**

(71) Applicant: **SWAGELOK QUICK-CONNECT CO.**
**5171 Hudson Drive**
**Hudson Ohio 44236-3799(US)**

(72) Inventor: **Medvick, Richard John**
**3715 Traynham Road**
**Shaker Heights, Ohio 44122(US)**

(74) Representative: **Jones, Colin et al**
**W.P. THOMPSON & CO. Coopers Building**
**Church Street**
**Liverpool L1 3AB(GB)**

(54) **Bulkhead mounting for fluid fittings.**

(57) In a bulkhead mounting arrangement for a fluid coupling, the coupling part includes a centrally located externally threaded region (100) having a predetermined axial length. First and second panel nuts (102,104) are received on the threaded region for independent, selective axial movement thereon. One nut is received on either side of the bulkhead or panel (B) so that axial adjustability of the mounting position is provided.

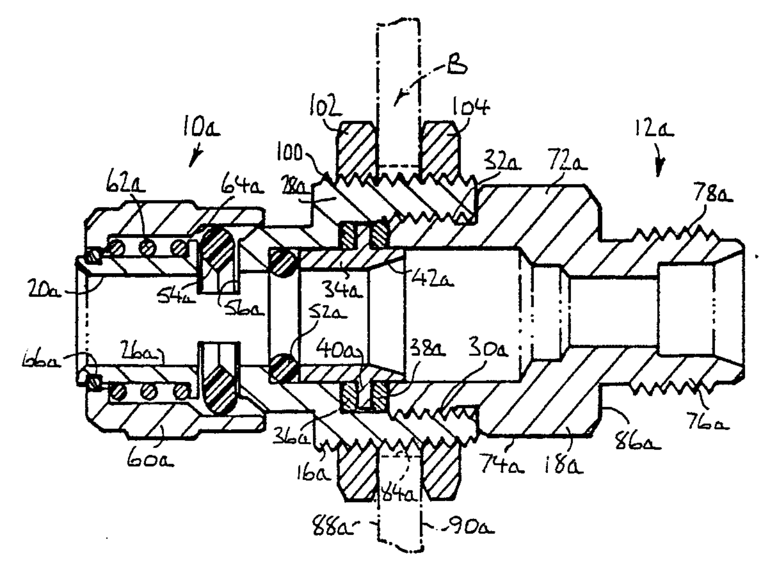


Fig 2.

EP 0 278 687 A2

# BULKHEAD MOUNTING FOR FLUID FITTINGS.

This invention relates to fluid fittings and, more particularly, to mounting arrangements for such fittings.

The invention is particularly applicable to a bulkhead type mounting for quick-connect couplings of the type described in US-A-4,114,853 and US-A-4,378,028. Although the invention will be described with particular reference to use on the female part of such a coupling, the invention has broader applications and uses.

Fluid couplings of the type described in the above-identified patents, generally comprise separate male and female parts which may be selectively connected in and disconnected from fluid-communicating relation with each other. In selected applications, one of the coupling parts is closely received in a panel aperture, and a panel nut is disposed on a threaded end of the coupling part. The panel nut is removed to enable the coupling part to be inserted into the aperture. The coupling part is advanced into the aperture until a shoulder or enlarged diameter portion abuts one side of the panel. The panel nut is then run up on the threaded end of the coupling part from the other side of the panel to securely mount the coupling part relative thereto. Once the coupling part is secured to the panel, a compression-type fitting or other suitable connecting structure is mounted on the terminal end of the threaded portion. The opposite end of the coupling part is disposed in a cantilevered fashion from the panel for selective engagement with a mating coupling part.

Although this conventional panel mounting arrangement has met with substantial commercial success, a few areas remain for improvement. Namely, the axial extent of the coupling part from the panel is fixed since the panel is disposed intermediate a fixed shoulder or enlarged diameter portion and the panel nut. Dimensional requirements in different environments may render alteration of this predetermined axial length advantageous. Even one-eigth or one-quarter of an inch (3.17 or 6.35 mm) can be crucial. As a result, it has been considered desirable to have the capability of adjusting the extent of axial protrusion of the coupling part from the panel.

It also has been considered desirable to shorten the axial extent of the coupling part from the panel. Undue bending moments can otherwise be transferred to the panel and panel nut under the conventional arrangement.

An object of the invention therefore, is to provide a central mounting area on the coupling part to achieve a shorter axial extent from the panel.

Still further, it is an object to effect a reduction in the overall axial length of the coupling part. In this manner, the close dimensional requirements on either side of the panel may be alleviated somewhat to provide greater room for fitting installation, replacement, and the like.

The invention is thought to overcome the above noted problems and others in an efficient and economical manner. the invention provides greater versatility and adjustability for a bulkhead mounting arrangement.

In accordance with the invention, a coupling part adapted for mounting to an associated bulkhead or panel includes a body member having a central passage, a first end adapted for selective operative engagement with an associated mating coupling part, and a second end adapted for connection to an associated fluid line. A sleeve received on the body member is biassed axially towards the first end of the body member. An adjustable panel mounting means includes a threaded region interposed between the first and second ends. First and second nuts are, in turn, co-operatively received by the threaded region for selective adjustment therealong to retainingly engage a bulkhead or panel therebetween.

According to another aspect of the invention, the coupling part includes a female receiving member at the first end and a body extension section at the second end.

According to yet another aspect of the invention, the threaded region is disposed on the female receiving member intermediate the first and second ends of the coupling part.

According to a further, alternative aspect of the invention, the threaded region is disposed on an annular member received over one end of the female receiving member.

A principal advantage of the invention resides in the capability for adjusting the mounting arrangement of the coupling part to the panel.

Another advantage of the invention is realized in the reduced torque imposed on a coupling part.

Still another advantage resides in the shortened overall axial length of the coupling part.

A still further advantage of the invention is found in the accessibility from either side of an associated bulkhead or panel.

The invention is further described, by way of example, with reference to the accompanying drawings, wherein:

Fig.1 is a vertical sectional view of a conventional female coupling part mounted to a panel;

Fig.2 is a vertical sectional view of a female coupling part according to one embodiment of the invention, having adjustable mounting means incorporated thereinto;

Fig.3 is a vertical sectional view of a conventional coded coupling part mounted to a panel;

Fig.4 is a vertical sectional view of a coded coupling part according to another embodiment of the invention, having adjustable mounting means incorporated thereinto; and

Fig.5 is a cross-sectional view of a body section formed in accordance with the invention.

The drawings show an improved arrangement that facilitates bulkhead mounting of quick-connect couplings, is applicable to various quick-connect coupling arrangements and is most closely associated with those shown in US-A-4,114,853 and US-A-4,378,028.

With reference to the prior art of Fig.1, essentially representing US-A-4,378,028, the female coupling part A includes a first end 10 adapted for selectively and matingly receiving a male coupling body portion (not shown) and a second end 12 adapted for connection to an associated fluid system (not shown). Both of these connections may be made by conventional known means. Typically, the female coupling part A includes a main body 14 shown formed from separate body sections 16,18 having a central passageway 20 defined therethrough. The body section 16 has a generally cylindrical shape with a narrowed receiving region 26 at the first end and an enlarged region 28 at its other end. Prior art constructions of the type shown in Fig.1 have an interior threaded region 30 at the enlarged diameter region 28. The internal threads co-operate and matingly receive external threads 32 of the second body section 18.

A combination valve seat/sealing sleeve 34 is axially and radially retained between the body sections 16,18. Two axially spaced seal rings, such as O-rings 36,8 are disposed on opposite sides of a radially extending flange 40 to prevent fluid leakage at the juncture of the body sections. Further, a tapered valve seat area 42 on the sleeve 34 co-operates with a spring biassed check valve poppet 48, particularly co-operating with seal ring 50 on the poppet. An enlarged seal ring, such as O-ring 52, extends radially inwardly at one end of the combination valve seat/sealing sleeve 34. The O-ring 52 is adapted for sealing engagement with a corresponding male stem portion (not shown) selectively received through the receiving region 26 as is known in the art.

Locking means, such as locking dogs 54, are received in slotted areas 56 of body section 16. The locking dogs are moved radially inwards into locking engagement with a corresponding male stem portion through selective axial movement of a locking/releasing sleeve 60. The sleeve 60 is biassed outwardly towards the first end 10 by spring 62. A tapered camming surface 64 selectively engages the locking dogs to cam the dogs radially inwards. A stop ring 66 limits outward movement of the sleeve 60 relative to the body section 16.

The second body section 18, as described above, includes an externally threaded protion 32 at one end. Further, an enlarged diameter portion 72 includes tool-receiving surfaces or wrench flats 74 to assist in make-up of the femal coupling part A. A reduced diameter section 76 is defined at the second end 12 of the coupling body portion and it, too, is externally threaded at 78. In prior art structures, such as the one shown in Fig.1, the external threads 78 have considerable overall axial length in order to accommodate a compression fitting nut (not shown) for connection to an associated fluid line, as well as a bulkhead or panel mounting nut 80. The panel nut is designed to retain the female coupling part A in aperture 84 on a panel or bulkhead B. More particularly, the enlarged diameter portion 72 of the body portion defines a radial shoulder 86 at the interface area with reduced diameter section 76. This shoulder abuttingly engages one face 88 of the panel B. The other face 90 is abuttingly engaged by the panel nut 80 as it is advanced along the threaded region 78. The panel nut can be tightened against the second panel face 90 to mount the female coupling part A securely to the panel.

A comparison of the modified bulkhead mounting arrangement in Fig.2 with the prior art mounting arrangement of Fig.1 illustrates some of the problems overcome by the improved arrangement. For ease of illustration and discussion, like numerals with the notation "a" refer to like elements, while new elements are identified by new numerals.

The enlarged diameter region 28a of the first body section includes an externally threaded region 100 (Figs. 2 and 5). Further, in accordance with the invention, first and second retaining members or panel nuts 102,104 are threadedly received on region 100 for independent and selective axial movement. In this arrangement, the overall axial dimension of the modified coupling part is substantially reduced. This reduction results from the limited amount of external threads 78a required at the second end of the coupling part. Since the panel, as well as the panel nut 80a, need not be accommodated adjacent the compression fitting nut, the axial length of the reduced diameter section 76a is substantially reduced. Although the spring-biassed poppet has not been shown for ease of illustration, all other structural aspects of the modified coupling part are the same as the prior art structure of Fig.1 unless noted otherwise.

The enlarged diameter region 28a defines the maximum diameter of the entire female coupling part. Thus, the modified female part of Fig.2 can be received through the aperture 86a from either side 88a or 90a of the panel. In the prior art arrangement of Fig.1, the second end 12 of the coupling part A can only be received through aperture 86 from the first side 88 to orient the coupling part on the first side as shown. Further, the opening in each panel nut 102,104 in the structure of Fig.2 is larger than the remainder of the female coupling part. In this manner, the coupling nuts can be easily received over the coupling from either end during the panel mounting process. This capability should be contrasted to the prior art arrangement of Fig.1 where the coupling nut 80 could only be received over the second end 12 of the coupling part.

Still further, the generally centralized mounting of the coupling part along the enlarged diameter region reduces the moment potentially imposed on the bulkhead or panel-mounted fitting. With reference again to Fig.1, with the coupling part mounted adjacent the second end 12, and with receipt of an associated male coupling part in the first end 10, a substantial lever arm is imposed should any forces having a componenet parallel to the panel exerted on the first end 10. In the embodiment of Fig.2, securing the female coupling part along the central enlarged diameter region 28a substantially reduces the lever arm and, thus, the potential for damage to the fitting.

Yet another advantage realized by the modified arrangement of the invention is the capability for adjusting the axial position of the coupling part relative to the panel. The external threaded region 100 extends over a fairly large axial length and a panel can be received between the panel nuts 102,104 virtually anywhere along this length. Thus, if it becomes necessary to position the receiving region 26a of the coupling part at a preselected dimension from the panel, rotation of the panel nuts permits some "play" to achieve a desirec positioning. In prior arrangements, the panel had to be located at one position relative to the coupling part, i.e., in abutting engagement with the enlarged diameter portion 72, and virtually no axial adjustability was permitted.

Turning now to the coded coupling arrangement of Figs. 3 and 4, and for ease of illustration, like elements are identified by like numerals with the notation b, c, respectively, and new elements are identified by new numerals. The prior art coded female coupling part of Fig. 3, representative of US-A-4,114,853, also includes first and second body sections 16b, 18b interconnected along co-operating threaded portions 30b, 32b. The combination valve seat/sealing sleeve 108 is itself an elastomeric member that receives first and second O-rings 110,112. The first O-ring 110 is comparable to the seal ring 52 of the Fig.1 embodiment and is adapted for sealing engagement with an external portion of the male coupling part (not shown) as is known. the second O-ring 112 defines the valve seat for ball 114 forming the spring biassed poppet. The ball 114 and spring 116 can be removed (Fig.4) if a shut-off arrangement is not required.

The coded coupling arrangement includes a somewhat modified locking/releasing sleeve 60b and a concentric coded sleeve 120. The sleeve 60b is spring-biassed towards engagement with stop ring 66b and includes a camming surface 64b to force the locking balls 54b radially inwards. The coded sleeve 120 is also biassed by spring 122 against the enlarged diameter region 28b. As is known in the art, various coded arrangements are selectively provided by altering the gap defined between the sleeves 60b and 120 or the axial length of the sleeves.

The conventional coded coupling arrangement also employs a single panel nut 80b that co-operates with shoulder 86b on the second body section 18b. The panel is located between the nut and shoulder and the reduced diameter section 76b with external threads is extended for receiving the panel nut 80b as well as the compression fitting nut (not shown).

In a manner somewhat similar to the previously described Fig.2 embodiment, the modified first body section 16c of Fig.4 is externally threaded at 100c along a major portion of its axial length to receive first and second panel nuts 102c, 104c. Preferably, the threaded region 100c is provided on a separate, co-operating annular member 124 received on the enlarged diameter portion 28c of the first body section 16c. The annular member 124 includes a radially inwardly extending section 126 at one end co-operatively reveived in a peripheral groove 128 of the enlarged diameter portion 28c. The inwardly extending section 126 is thereby axially retained between enlarged diameter portion 72c of the second body section 18c and the remainder of the enlarged diameter section 28c of the first body section 16c. The external threaded region 100c extends along the entire axial length of the annular member 124 and, as shown, has a maximum radial dimension slightly less than that of the coded sleeve 120c. Additionally, the minor diameter of threaded portion 100c is slightly greater than the corner-to-corner dimension of the wrench flats 74c, to enable the panel nuts to pass over the second end 12c. Alternatively, the annular member 124 could have a maximum radial dimension greater than that of the coded sleeve to permit the panel nuts to be received over either end of the coupling part. It is necessary, though, in the illustrated arrangement of Fig.4, that the panel nuts 102c, 104c at least be easily received over the enlarged diameter portion 72c of the coupling part because of the enlarged coded sleeve 120c at the first end.

Once again, the overall axial length of the modified coded coupling arrangement of Fig.4 is reduced in comparison with that of the conventional arrangement of Fig.3. Further, the female coupling part is centrally mounted to the panel bulkhead to limit any imposed moments thereon. Still further, the mounting position of the female coupling part can be axially altered due to the enhanced length of the threaded region 100c and the use of two independently movable panel nuts 102c,104c.

The invention has been described with reference to preferred embodiments. Modification and alterations are included insofar as they come within the scope of the claims.

## Claims

1. A fluid fitting adapted for mounting on an associated panel (B) or the like comprising a male or female coupling part (A) having a central passage therethrough, and adapted at its first end for selective co-operation with a mating portion of a corresponding female or male coupling part and at its second end for connection to an associated fluid line, the coupling part (A) having a threaded region (100) to be passed through an aperture (80) in the panel (B) and to receive a panel nut (102), characterised in that the threaded region (100,100c) is interposed between said first and second ends of the coupling part and first and second retaining means (102,104) are received on said threaded region (100,100c) for selective axial movement thereon between said first and second ends, whereby said coupling part is adapted for selective adjustable mounting to the panel (B).

2. A fluid fitting as claimed in claim 1, wherein the diameter of said threaded region (100,100c) is greater than the diameter of any of the remainder of the coupling part.

3. A fluid fitting as claimed in claim 1 or 2, wherein said second end or the coupling part is adapted to operatively receive a compresision fitting thereon.

4. An adjustable mounting assembly for a quick-connect coupling of the type having a male part including an axially extending stem, and a female part (B) including a receiving member (16) adapted at one end therof to selectively and closely receive the stem, the mounting assembly comprising a threaded region (100) on the female part and a retaining member (102) operatively received on the threaded region (100), characterised in that the externally threaded region (100,100c) is centrally disposed between opposite ends of the female part, and a second retaining member (104) is operatively received on said threaded region (100,100c) and the retaining members (102,104) are independently movable thereon, said first and second retaining members being adapted for operative engagement on opposite sides (88,90) of the mounting panel.

5. A mounting assembly as claimed in claim 4, wherein said externally threaded region (100,100c) is formed on said receiving member (16a,16c) at the other end thereof.

6. A mounting assembly as claimed in claim 4 or 5, wherein said threaded region (100,100c) has a diametrical dimension greater than the remainder of the female coupling part.

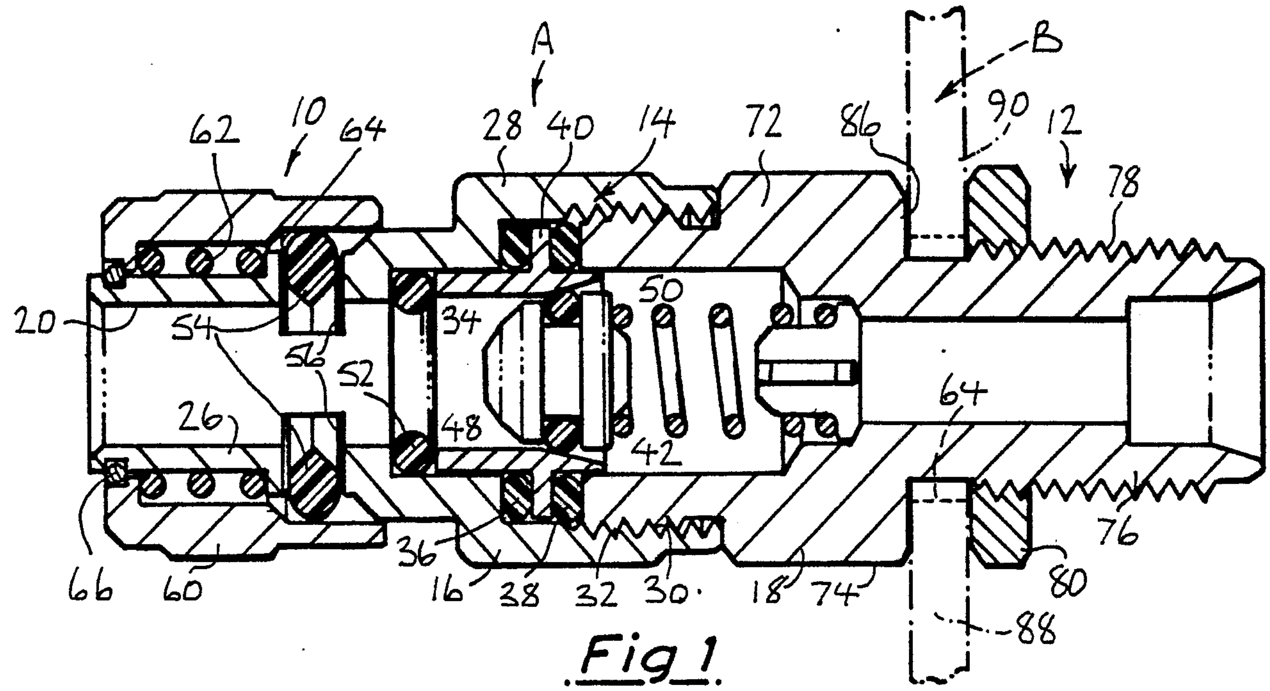


Fig 1
PRIOR ART

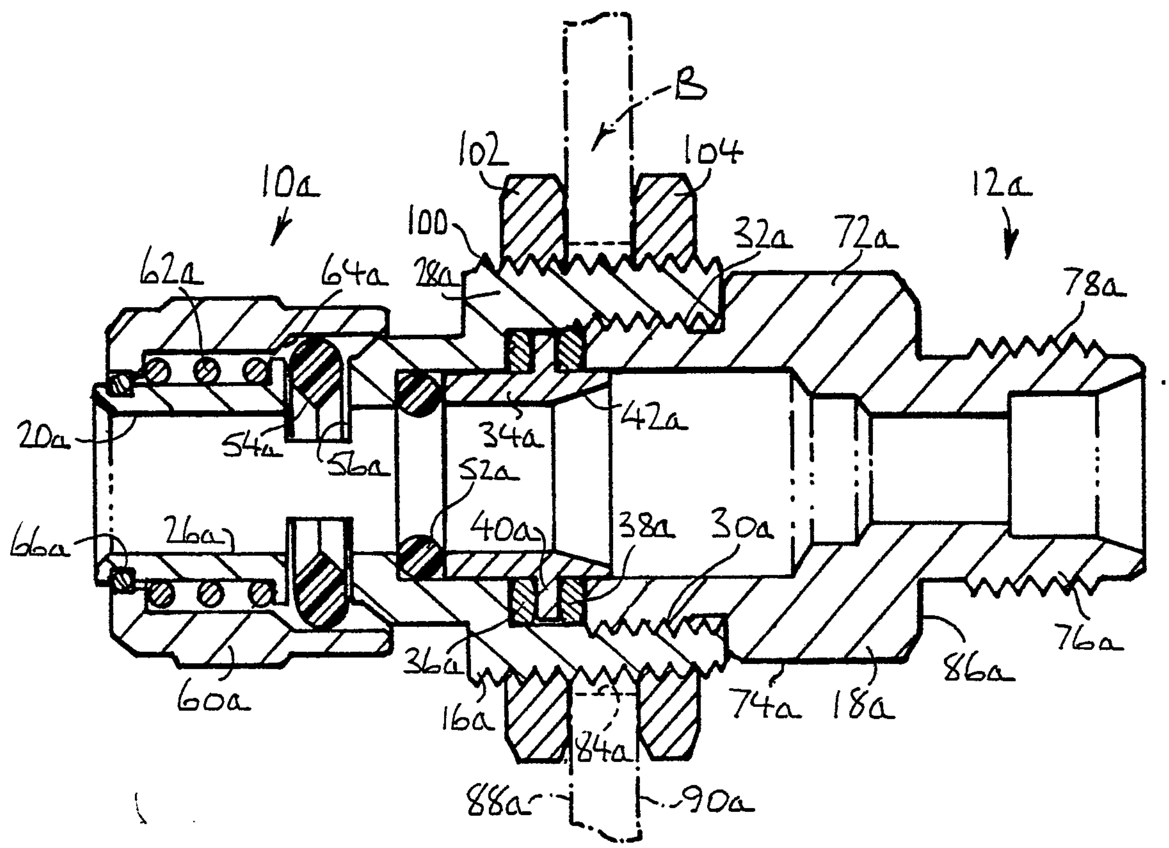


Fig 2

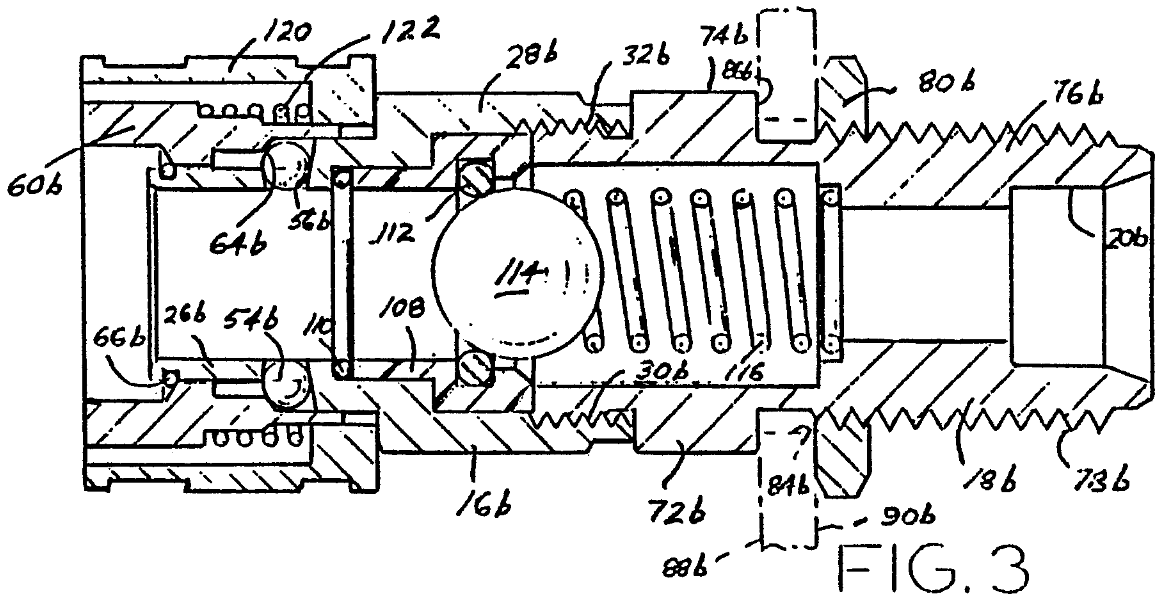


FIG. 3
(PRIOR ART)

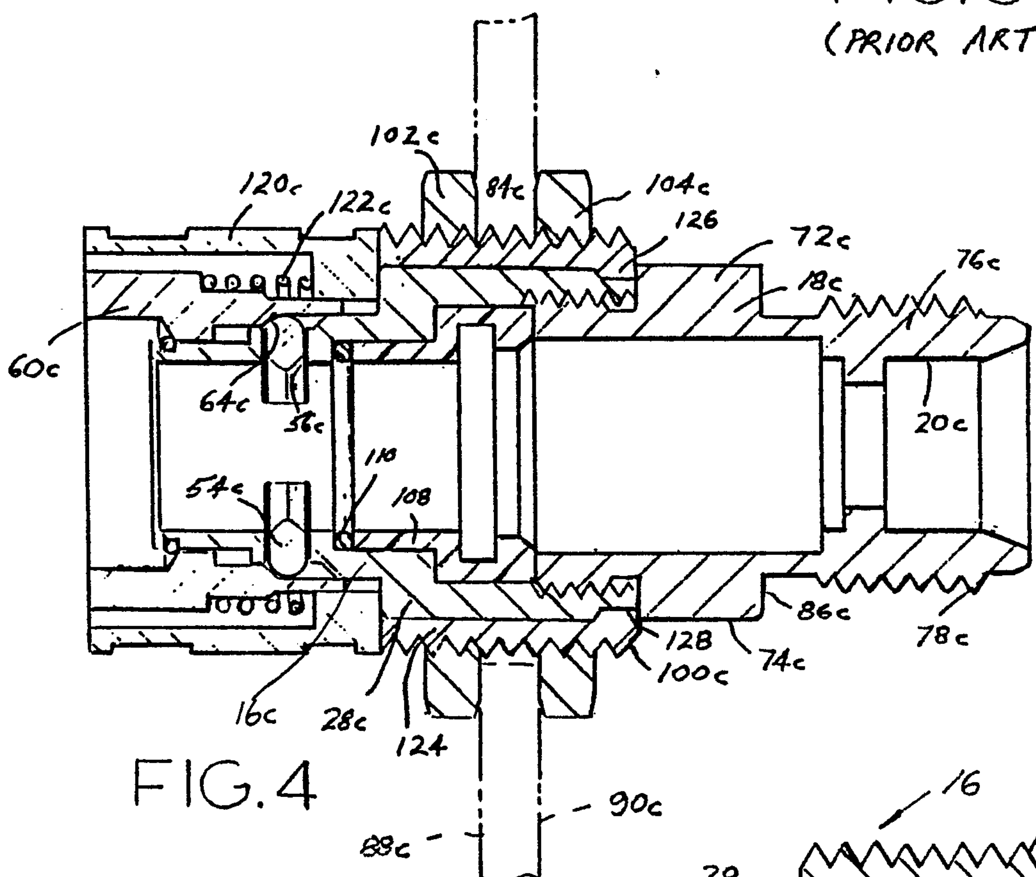


FIG. 4

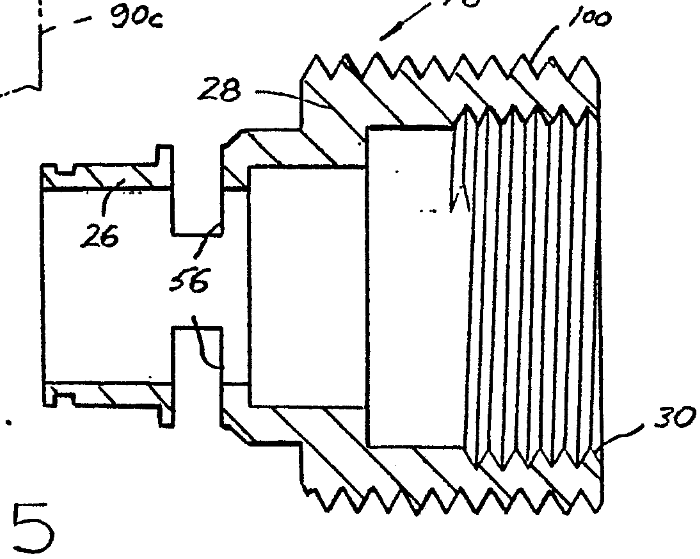


FIG. 5